(19) Europäisches Patentamt / European Patent Office / Office européen des brevets

(11) **EP 2 966 613 A1**

(12) **EUROPEAN PATENT APPLICATION**

(43) Date of publication:
**13.01.2016 Bulletin 2016/02**

(51) Int Cl.:
***G06T 3/40*** (2006.01)

(21) Application number: **14306130.7**

(22) Date of filing: **10.07.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Thomson Licensing**
**92130 Issy-les-Moulineaux (FR)**

(72) Inventors:
 • **Gandolph, Dirk**
 **30952 Ronnenberg (DE)**

 • **Putzke-Roeming, Wolfram**
 **31137 Hildesheim (DE)**
 • **Salvador Marcos, Jordi**
 **30625 Hannover (DE)**
 • **Kochale, Axel**
 **31832 Springe (DE)**

(74) Representative: **König, Uwe**
**Deutsche Thomson OHG**
**Karl-Wiechert-Allee 74**
**30625 Hannover (DE)**

(54) **Method and apparatus for generating a super-resolved image from an input image**

(57) Known example based super-resolution algorithms usually use a fixed rectangular search window, which tests many unsuitable matching positions. An improved search window is image content adaptive and non-geometric and lists each test position separately. An input image for being super-resolved is over-segmented into superpixels and a topology level is assigned to each pixel. The topology level indicates a pixel's distance from the nearest edge of its respective superpixel. Test positions in the search window are determined according to their distance from an initial position (col, row) and a difference between topology levels of each test position and the topology level of said initial position (col, row).

Fig.2

| MTV | | |
|---|---|---|
| i | x | y |
| 0 | col | row |
| 1 | col-1 | row-1 |
| 2 | col+1 | row+1 |
| 3 | col-1 | row |
| 4 | col+1 | row |
| 5 | col | row-1 |
| 6 | ... | ... |

EP 2 966 613 A1

**Description**

Field of the invention

This invention relates to a method and an apparatus for generating a super-resolved image from an input image.

Background of the Invention

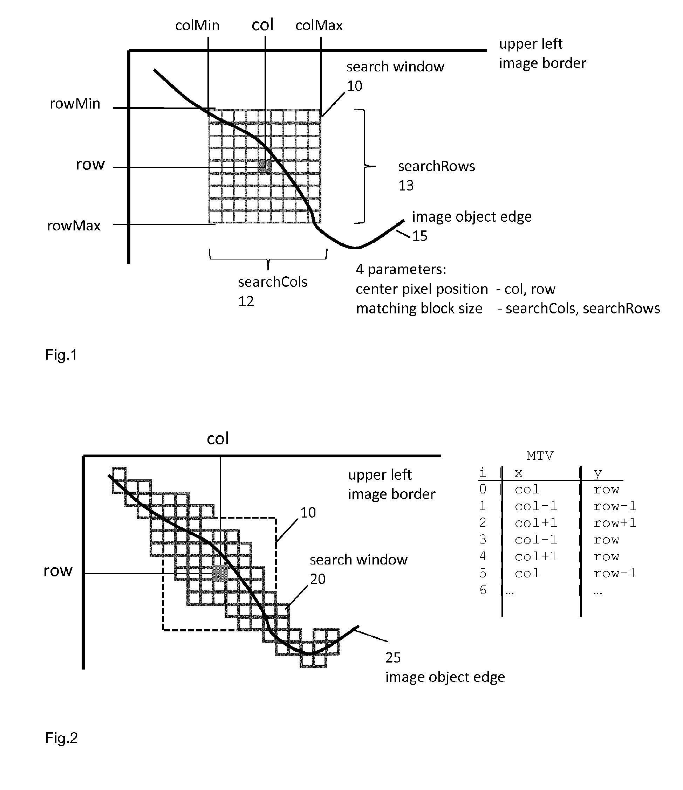

Super-resolved images and videos can be calculated using example based super-resolution algorithms (EBSR). The EBSR algorithms are looking for self-similarities in a picture by matching image data taken from a low-pass (LP) filtered, low -resolution (LR) input image, and testing it against the present or generated high-resolution (HR) image. The best match found determines the location within the high-pass (HP) filtered part of the LR input image. This is then used as high-frequency (HF) enhancement data to generate the super-resolution image. The matching is applied within a rigid matching raster, namely a fixed rectangular search window, as shown in Fig.1. The search window 10 is a rectangular that is defined by a position (col,row) and a size in terms of search columns 12 and search rows 13. When searching pixels near an image object edge 15 within the search window, all search positions within the search window are searched. Further, it is known to perform image analysis on a video image or still image for a spatio-temporal scene over-segmentation, which results in segments (super-pixels or patches), and to store image analysis results as metadata of the image. [2] describes such metadata for a spatio-temporal consistent scene over-segmentation, which is based on earlier works as [3,4]. The segments can help to define metadata representing a higher abstraction layer, beyond pure object detection.

Known EBSR algorithms use a rigid matching raster, usually a fixed rectangular search window. This limitation is a disadvantage, since the rigid rectangular search window tests a large amount of poor suited matching positions. Thus, the matching test is unspecific and not adapted to the image content.

[5] US2012/281923 uses patch-dependent search regions with shapes that are geometric, such as circles, ellipses, polygons, or that are based on patch-dependent content information; the patch-dependent search regions can also be based on pre-computed internal image statistics of natural image patches. E.g. similar patches are searched along or near edges of the image.

The European SCENE project bundles the expertise of research institutions and companies to create and deliver richer media experiences [1]. One target of SCENE is the development of a novel Scene Representation Architecture (SRA), providing means to aggregate and store scene materials. The SRA supports a wide range of movie assets reaching from sample based video to model-based CGI sources and include metadata storage to ensure their availability within subsequent processing steps.

Summary of the Invention

It has been recognized by the inventors that often the amount of matching tests is unspecific and not adapted to the image content. In consequence a high quality for super-resolution is only reached if the matching process scans a large search area to cover all relevant location candidate blocks. This is costly and due to the expanded search area may also end in misleading matching minima. In Fig.1, when searching pixels near the image object edge 15 within the search window, most search positions are far away from the image object edge 15.

The present invention avoids these drawbacks by substituting the rigid search window raster for matching by a match-test vector that provides arbitrarily shaped search areas. Thus, the invention provides a better suited set of test locations, which is defined by the match-test vector. The match-test vector allows utilizing additional information about good matching candidates and can be considered as a "smart shaped search window". It has the ability to describe an arbitrary-shaped and - by means of a vector index - a prioritized set of matching coordinates. Thus, it optimizes the matching process by substituting the rigid matching raster with a more flexible and more appropriate smart shaped search window. In addition, the match-test vector allows pre-selecting adequate candidate positions by exploiting knowledge about the image content. The match-test vector can be used to control an algorithm or device for e.g. super-resolution, image denoising and other applications. The invention results in better quality and reliability provided by the algorithm or device for super-resolution.

In one embodiment, a method for generating a super-resolved image from an input image using example based super-resolution comprises low-pass filtering the input image, high-pass filtering the input image, spatially upsampling the input image, for each block of the spatially upsampled input image searching a similar block in the low-pass filtered input image, determining its corresponding block in the high-pass filtered input image and enhancing the block in the spatially upsampled input image by the block of the high-pass filtered input image.

According to one embodiment of the invention, a computer-implemented method for generating a super-resolved version of an image by using example based super-resolution comprises steps of generating a low-resolution (LR) high-frequency (HF) version of the image and a low-resolution (LR) low-frequency (LF) version of the image, upsampling the image by using spatial interpolation, wherein a high-resolution (HR) low-frequency (LF) version of the image is obtained, then for each block in the HR-LF version of the image, searching a similar block in the LR-LF version of the image and detecting the similar block's relative position, extracting at said position a block from the LR-HF version of the image, and adding the extracted block from the LR-HF version of the image at said position to the HR-LF version of the image, wherein a super-resolved version of the image is obtained. Further, the step of searching a similar block in the LR-LF version of the image comprises the search being performed within a search window that is individual for each block of the HR-LF version of the image and comprises, for a current block, a list of test positions to be compared with the current block. The list is referred to as match-test vector herein and may contain references to the test positions, e.g. coordinates. The coordinates may be absolute, which provides a lower risk of data loss, or relative, which reduces the amount of data. Generally, the search window comprises test positions around an initial test position, which in one embodiment is collocated with the current block (ie. at the same relative coordinates). In an embodiment, the initial test position is found in a preceding search (full search, random search, random search enhanced by neighbor propagation etc.) anywhere in the image.

In one embodiment, the original image is over-segmented into superpixels with any conventional method, wherein image analysis (e.g. edge-detection) is used. The match-test vector points at the test positions that constitute the search area. In one embodiment, for pointing at N test positions, the match-test vector has 2N+1 parameters that each points at a pixel. The pixel is a reference point of a candidate block, thus defining the candidate block.

In some embodiments, the invention is related to how to construct the match-test vector. According to such embodiments, the test positions are determined according to their distance from a current block, wherein the distance comprises two distance components. In one embodiment, one of the distance components is a Manhattan distance, and the other distance component is a topology level difference.

The present invention generates major benefits at least for EBSR algorithms. A first benefit available with the usage of a match-test vector according to the invention is a gain in efficiency that is achieved by excluding redundant test locations. A second benefit is a reduced risk of excluding relevant matching locations. Further, a third benefit is the possibility to widen the active search area without a need to increase the amount of tests. Finally, an advantage is the option to minimize the number of matching tests applied without creating quality losses. Some of the benefits result from the elimination of unreliable or redundant matching test positions.

According to one embodiment of the invention, the match-test vector defines a plurality of test positions and their sequential order or rank, and the test positions constitute a search area with an arbitrary non-geometric shape (ie. not square, not rectangular, not circular, not ellipsoid etc.), where each possible test position is individually stored.

A device that utilizes the method is disclosed in claim 9. A device for generating a super-resolved image from an input image is disclosed in claim 10.

A computer readable medium having executable instructions to cause a computer to perform a method comprising steps as disclosed in the claims and/or the specification.

Advantageous embodiments of the invention are disclosed in the dependent claims, the following description and the figures.

Brief description of the drawings

Exemplary embodiments of the invention are described with reference to the accompanying drawings, which show in

Fig.1    a conventional search window;
Fig.2    a search window according to the invention;
Fig.3    image super-resolution processing according to the invention;
Fig.4    an image and exemplarily its corresponding superpixels;
Fig.5    smart search window generation;
Fig.6    the principle of the construction of a superpixel topology map;
Fig.7    determination of a total distance between pixel positions from a Manhattan distance and a topology level difference;
Fig.8    a quality comparison of images obtained from the invention with images obtained with known methods;
Fig.9    dependency of an obtained image quality from the number of test positions;
Fig.10   a flow-chart of the method according to one embodiment of the invention; and
Fig.11   a block diagram of a device according to one embodiment of the invention.

Detailed description of the invention

The invention relates to search windows, which can be used *inter alia* in cases where for pixel blocks ("blocks" herein) of a given input image similar blocks are searched in another image, the so-called target image. The input image is also referred to as query image, and its blocks are query blocks. Often the target image is identical with the query image or very similar, e.g. a temporally neighboring image taken from a video sequence, or a downscaled or upscaled version thereof.

Fig.2 shows a search window according to the invention. It has the same number of test positions as the conventional search window in Fig.1, but the test positions are more relevant since they are on average closer to the image object edge 25. Image blocks along image object edges have a higher probability of being similar to each other than arbitrary image blocks. Therefore, the search window according to the invention is improved since it covers more of the potentially relevant test positions and thus increases the probability of finding similar blocks. Since it usually does not have a common geometric shape, such as square, rectangular, circular, ellipsoid etc., it is smart shaped. Its shape depends on the content of the underlying images. The search window is located around an initial position col,row that can be found in various manners. In a simple case, the initial position col,row is collocated with the query block. That is, if a similar block is searched for a query block at a given position $x_q,y_q$, then the initial position col,row is the same, relative to the image sizes of the query image and the target image. This can be formally expressed by

$$\frac{x_q}{x_{max}} = \frac{col}{col_{max}} \quad \text{and} \quad \frac{y_q}{y_{max}} = \frac{row}{row_{max}} \tag{1}$$

where $x_{max}$ and $y_{max}$ are the width and height of the query image, and $col_{max}$ and $row_{max}$ are the width and height of the target image.

In another embodiment, the initial test position is found in a preceding search operation (full search, random search, random search enhanced by neighbor propagation etc.) and is located anywhere in the target image.

The test positions, including the initial position col,row, are stored in a match-test vector. Fig.2 shows parts of an exemplary match-test vector MTV that lists an index i and coordinates x,y of all test positions for any particular initial position. As apparent, the test positions are not necessarily in a geometrically given order, such as line-wise or column-wise. Instead, they may be ordered according to relevance, as indicated by their index and further described below. Further, the coordinates may be absolute coordinates or relative coordinates, and relative coordinates may be relative to the image size and/or relative to any reference location, such as the initial position. E.g., the match-test vector may comprise absolute coordinates for the initial position and, for the other test positions, coordinates that are relative to the initial position.

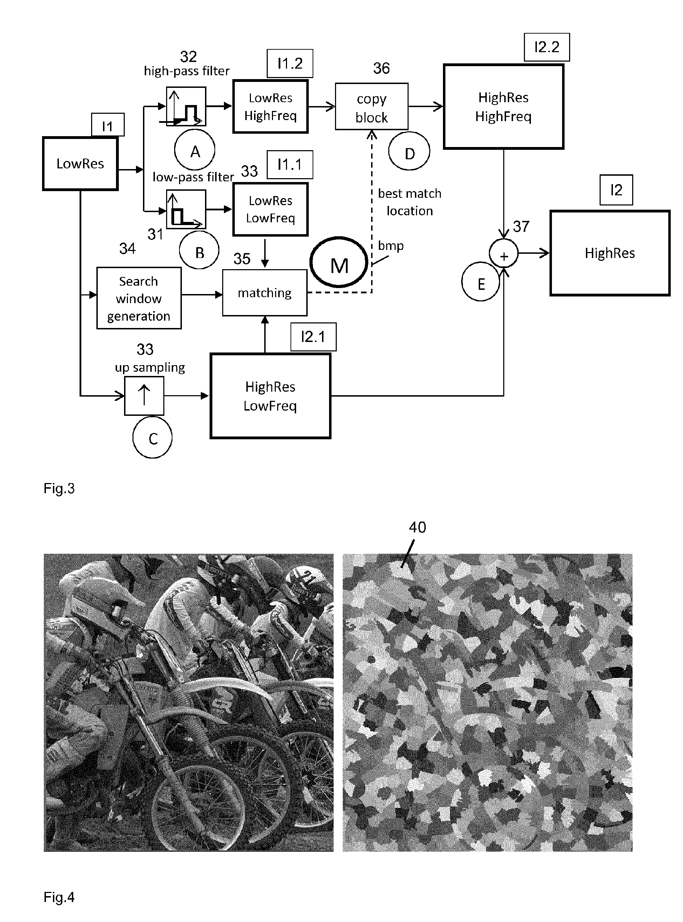

Fig.3 shows exemplarily image super-resolution processing according to one embodiment of the invention. The processing steps are applied to a low-resolution (LR) input image I1 for generating a high-resolution (HR) output image I2. The HR output image I2 is composed of separate LF and HF components. To obtain them, the LR input image I1 is processed by three different filters 31,32,33. A low-pass filter 31 and a high-pass filter 32 separate the input image I1 into two separate images, one of them I1.1 comprising the low-frequency (LF) part and the other one I1.2 the high-frequency (HF) part. I.e., two LR images are obtained from the LR input image I1, and the filters are referred to as LR-LF filter I1.1 and LR-HF filter I1.2, respectively. The third filter 33 is an up-sampling filter for generating a first HR image, which is used as LF component of the HR output image I2 and is referred to as HR-LF image I2.1. The third filter can be e.g. a bi-cubic filter for bi-cubic interpolation of the input image, or any other interpolation filter for obtaining a HR version of the input image.

In the following processing steps, the HF component of the HR output image I2, referred to as HR-HF image I2.2, is generated by exploiting the images' inherent cross-scale self-similarity. The cross-scale self-similarity is analyzed by matching pixel blocks located in the HR-LF image I2.1 against the LR-LF image I1.1. Pixel blocks can have any size, but all pixel blocks used in the process have the same size. Typical block sizes are 3x3, 3x4, 4x4,...,3x8,...,8x8 pixels. In one embodiment, pixel blocks are overlapping horizontally, vertically or both horizontally and vertically, and multiple contributions to a pixel are normalized, e.g. averaged. The overlap smooths the resulting HR-HF image I2.2 and thus improves the output image quality. A smart shaped search window according to the invention is used for matching. The HR-LF image I2.1 serves as query image, and the LR-LF image I1.1 as target image where the similar blocks are searched. The search window is generated in a search window generation step 34, which may be separate or incorporated in a matching process 35. The matching process 35 selects pixel blocks from the HR-LF image I2.1 as query blocks and searches similar blocks within the LR-LF image I1.1, in a search area defined by the search window. The search window is individually generated for each query block. The matching process 35 outputs for each query block a best match location bmp within the search area, which identifies a block in the LR-LF image I1.1. The best match locations bmp are determined by any known matching criterion, e.g. the sum-of-absolute-differences (SAD). The HR-HF image I2.2 is composed from blocks of the LR-HF image 11.2 that are located at the best match location bmp therein. Therefore, the best match locations bmp found in the LF-LR image I1.1 are used in a block copying process 36 to copy the blocks located at the best match locations bmp within the LR-HF image 11.2 to their appropriate location in the HR-HF image I2.2. The appropriate location is the location of the query block within the HR-LF image I2.1. Thus, the target block locations of I2.1 and I2.2 are identical and the source block locations of 11.1 and 11.2 are identical. In other words, the block that is copied from the LR-LF image 11.2 will be used to enhance the query block from the HR-LF image I2.1. In the case of overlapping blocks, the copying process 36 may also include the above-mentioned normalization.

In a final step, the two generated HR image components, namely the HR-LF image I2.1 and the HR-HF image I2.2, are combined in a combining processing block 37, e.g. a simple adder for pixel-wise addition, to generate the final HR output image 12.

Now the matching block 35 is described in more detail. The matching block 35 searches for similarities between a target block and a source block. The target block (query block) has a fixed location in the HR-LF image I2.1, and the source block is searched and determined within a search area located in the LR-LF image I1.1. According to the invention, the matching process 35 examines block similarities using a smart shaped search window. This is advantageous as compared to a conventional rigid search window raster, where a rectangular image area is scanned. As shown in Fig.1, the conventional search window raster is determined by four parameters that define the search window center and its horizontal and vertical dimensions. The assignment of a rigid search window causes that the search will inevitably step over the edges of a local image object. This is a disadvantage for the search algorithm, since the rigid raster search includes image areas outside the actual target object. An advantage of the smart shaped search window according to the invention is an adaptation to the image content, which can be achieved by previous analysis steps. Another advantage of the smart shaped search window is that it does not use reduces redundant tests, which are caused by matching tests of irrelevant image locations and increase the risk of finding misleading secondary minima that lower the resulting super-resolution quality.

Further, another disadvantage of the rigid raster search is that the relation between appropriate and irrelevant matching candidates declines with growing window size. In other words, the number of irrelevant matching candidates becomes proportional larger for search windows of larger size. Advantageously, with the smart shaped search window according to the present invention the number of irrelevant matching candidates remains constant or even becomes proportional smaller for search windows of larger size.

The smart shaped search window is represented by a match-test vector, which can exemplarily be described with reference to in Fig.2. It shows a smart-shaped search area with N=81 test positions located around (and including) an initial position col,row. The raster constituting the search area is determined by (2N+1) parameters: one parameter describes the vector size (ie. N) and the remaining parameters are N pairs of coordinates of the test positions. The smart shaped search window according to the invention can provide any arbitrary shape for the search area, and thus is pixel-wise adaptive. This allows an individual shaped search window for each initial position of the search.

In one embodiment, the adaptive smart search windows is generated by exploiting scene knowledge as provided by superpixel metadata. This can be achieved by determining the most appropriate matching locations for the testing, where the prioritization can follow the expected relevance for good matching results. Superpixels are the result of an image over-segmentation. Fig.4 shows an exemplary image and its corresponding superpixels. The original image on the left-hand side has been processed to generate the superpixel image on the right-hand side. The superpixels are temporally consistent and coincident with the borders of the scene objects, whereas their sizes are typically smaller than the scene objects. E.g. a single motorbike wheel in the original image is a single object, but consists of several superpixels. The superpixels help preserving textural object characteristics, since each superpixel 40 is an adjacent area of similar appearance in terms of at least luminance, color and texture.

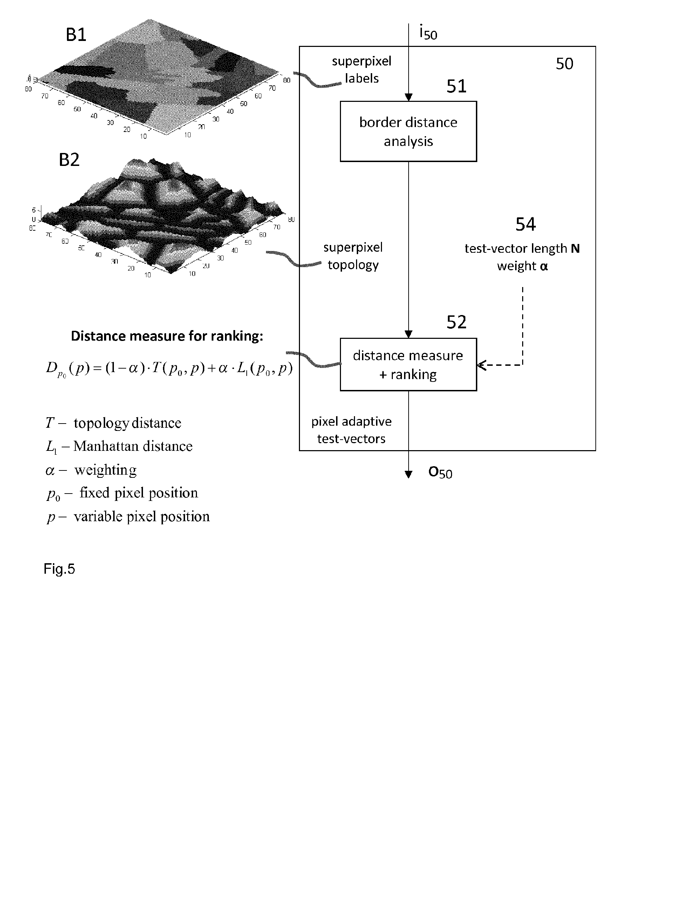

Fig.5 shows a processing method 50 for the smart search window generation, which may be viewed as part of the matching process. Thus, a smart search window generation module may be included in the matching module. In two processing steps, a border distance analysis 51 and a distance measuring 52 are performed. The distance measuring 52 may also include a ranking. In this case, the match-test vector is in principle a sorted list and more relevant test positions appear higher in the list. The border distance analysis 51 takes segmentation data B1 as input, e.g. superpixel label data, and evaluates the superpixel border distance for each pixel position to generate a superpixel topology B2. The superpixel label data may be received from an external unit, and an over-segmenting module that performs the border distance analysis 51 may have an input for receiving segmentation data for over-segmenting the input image into superpixels.

The distance measuring 52 receives the superpixel topology B2 from the border distance analysis step as input. In one embodiment, the distance measuring 52 receives also one or more adjustable parameters B4 for defining at least one of a test-vector length (ie. number of test positions per search window) and a weight $\alpha$ for being applied to the distance measure and/or ranking. In one embodiment, the distance measure uses a linear combination, so that the test positions are determined according to a linear combination of their distance from the initial position col, row and their distance from an edge of the current superpixel.

In one embodiment, the distance measure used for a ranking is calculated according to

$$D_{p_0}(p) = (1-\alpha) \cdot T(p_0, p) + \alpha \cdot L_1(p_0, p) \qquad (2)$$

Thus, the distance measuring 52 assigns a distance $D$ to each pixel position $p$ in relation to the current pixel position in focus $p_0$. The value of T represents the topology value difference between $p$ and $p_0$, $L_1$ is the Manhattan distance between $p$ and $p_0$, and $\alpha$ is the weighting value. In one embodiment, the Euclidean distance $L_2$ is used instead of the Manhattan distance $L_1$. The output of the distance measuring 52 contains pixel adaptive test-vectors $O_{50}$ holding for each pixel in the image the number of $N$ different test locations (e.g., x- and y-coordinates). The weight value $\alpha$ is in the range [0,1], where the value 1 means neglecting the topology distance, and the value 0 means excluding the Manhattan distance for the ranking. Tests shows that smaller values close to zero that privilege the topology impact are more appropriate, e.g. $\alpha = [0.0001,...,0.01]$.

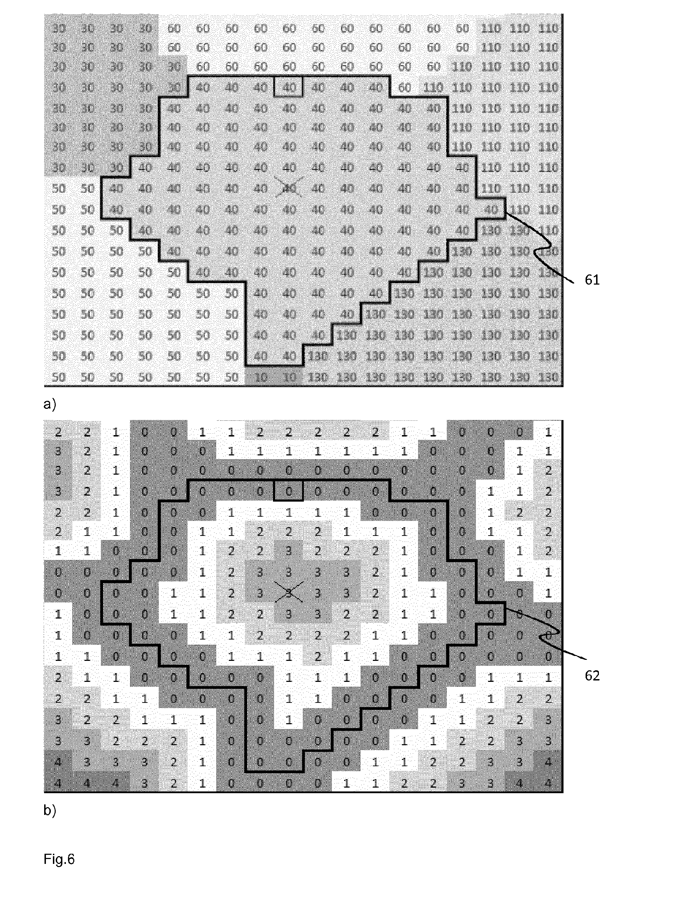

Fig.6 shows the principle of the construction of the superpixel topology generation in block 51, in a detailed example for generating a superpixel topology map. The upper part in Fig.6 shows a superpixel label map, where each pixel has assigned a superpixel label, which is exemplarily a numeric superpixel identifier, defining its affiliation. A superpixel 61 comprises pixel positions having the same superpixel label. The lower part in Fig.6 shows the resulting superpixel topology value, which has been calculated by assigning to each pixel position a distance measure being the shortest count of steps required to reach the superpixel border. For the count of steps, one step comprises one horizontally, vertically or diagonally adjacent pixel. Thus, since conventional Manhattan distances use a sum of absolute differences of coordinate values, the superpixel topology value is a kind of modified Manhattan distance. The example shows that border pixels have the lowest value (zero) associated, while the inner superpixel locations have assigned increasing values up to the maximum value of 3, in this example. It is noted that other distance measures may be used here. Likewise, the values may be scaled, or other values representing any particular distance measure may be used.

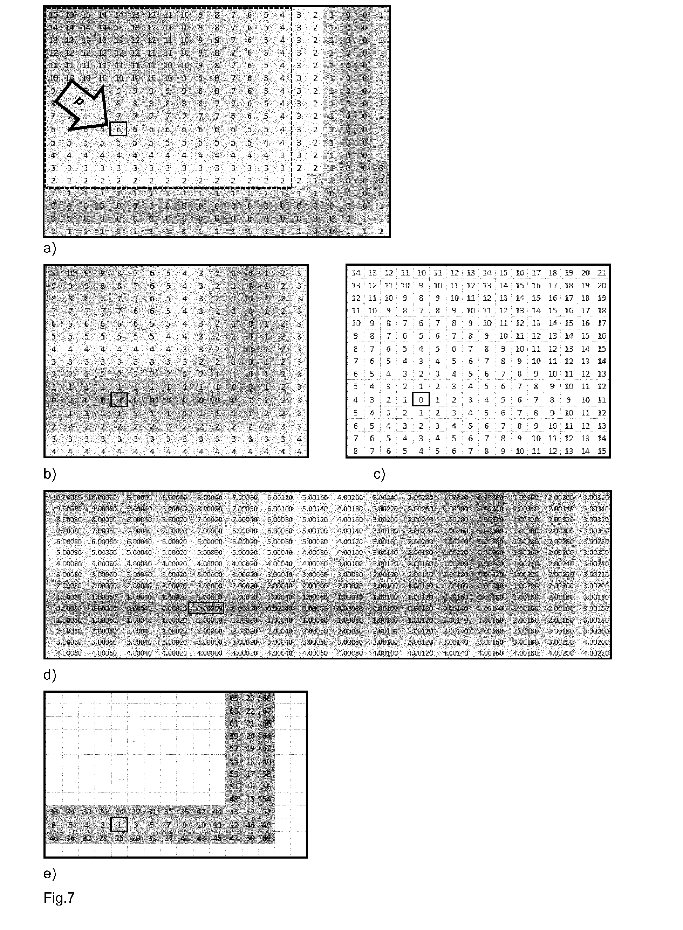

Fig.7 shows a detailed example using the distance measure calculation of eq.(2) and subsequent ranking as executed in the distance measuring block 52, in one embodiment. The superpixel topology shown in Fig.7 a) is input, which is obtained as described above with reference to Fig.6. Fig.7 b)-e) show intermediate processing steps and the results generated for an initial position $p_0$. Exemplarily, the initial position $p_0$ has a superpixel topology level "6" assigned. Fig.7 b) shows the topology differences for each test position $p$ against $p_0$. Thus, pixels denoted by "0" have a topology level of "6", pixels denoted by "1" have a topology level of either "5" or "7", etc. On the other hand, Fig.7 c) shows the conventional Manhattan distances between any pixel and the initial position (which has the value "0"). According to one embodiment of the invention, both (ie. the topology level difference and the Manhattan distance) are combined according to eq.(2) in order to obtain a value upon which the test positions are selected. As becomes clear from the above, the test positions need not be in a single superpixel; they may also be located in adjacent superpixels.

Applying eq.(2) with $\alpha = 0.002$ results in the values shown in Fig.7 d). Smaller values indicate either a similar topology level or close spatial neighborhood to the initial position. One advantage of this combination is that test positions having the same topology level are penalized more if they are farther away from the initial position. Thus, the search window will substantially follow topology levels, and therefore in principle also superpixel edges, but also include nearby positions.

The distance values in d) are input for the subsequent ranking, which arranges the locations according to their value in the match-test vector, which has up to $N$ elements. The output after the ranking for this example is shown in Fig.7 e) representing the match-test vector for pixel $p_0$, with $N = 68$. The shape of the match-test vector follows the shape of the superpixel, which reveals an advantage of the invention: the match-test vector follows exactly the object border and thus provides much more relevant test locations for the matching than other known search windows.

Another advantage of the match-test vector according to the invention becomes obvious by comparing Fig.1 and Fig.2. The number of test locations for the conventional rigid search window in Fig.1 is 9x9, resulting in 81 tests. The amount of tests executed in the depicted match-test vector solution of Fig.2 is the same, where N is 81 as well. However, the extent of the search area, in terms of maximum covered distances, in Fig.2 is larger than that in Fig.1, wherein the least relevant test positions are omitted.

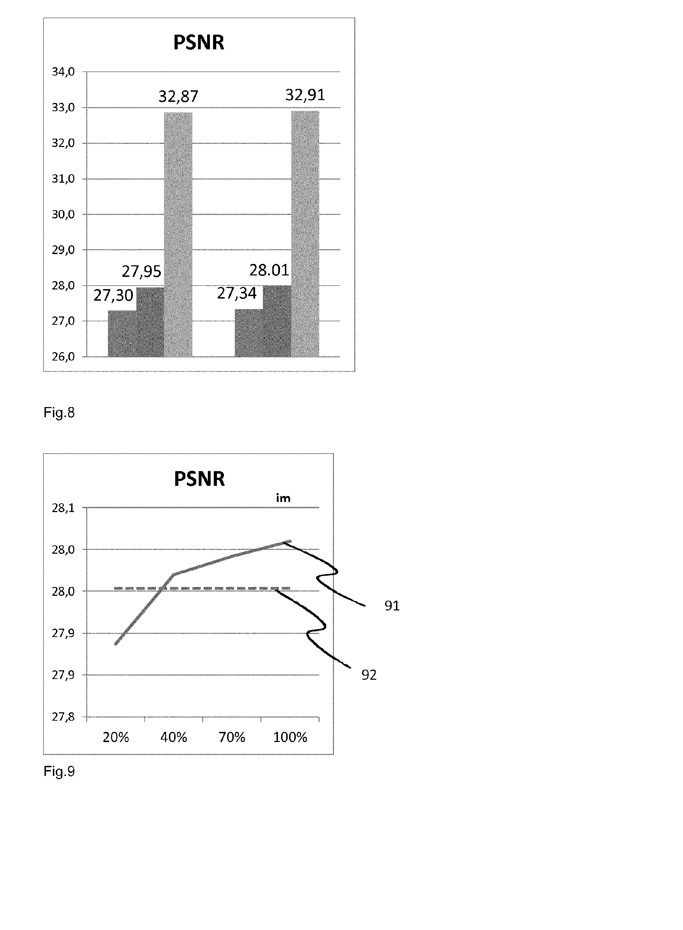

A further advantage of applying the match-test vector can be measured by means of comparing the different super-resolution outcomes against the ground truth images. Fig.8 shows a quality comparison of images upscaled by using search windows according to the invention with images obtained with known methods, in particular peak signal-to-noise ratio (PSNR) calculated for a conventional rigid search window super-resolution algorithm and the match-test vector super-resolution algorithm. Three different images have been up-scaled with both algorithms. The three left columns depict the PSNR values created with the conventional rigid search window raster, each for one image. The three right columns depict the PSNR values of those created with the match-test vectors according to the invention. The graphs shows that the match-test vector solution has better PSNR values for the same number of searches.

Another positive quality related to the match-test vector controlled super-resolution algorithm becomes apparent in Fig.9, with shows the dependency of an obtained image quality from the number of test positions. Here the graph depicts the influence to the ground truth PSNR value when reducing the number of tests by shortening the match-test vector size. The dashed line 92 in the graph shows the PSNR value reached for the rigid search window algorithm which is kept constant, while the solid line 91 depicts the match-test vector algorithm with increasing vector lengths. The graph shows that even with the reduction of the search area to 40%, which is less than the half of tests, the PSNR reached with the match-test vector algorithm exceeds the rigid search window algorithm result.

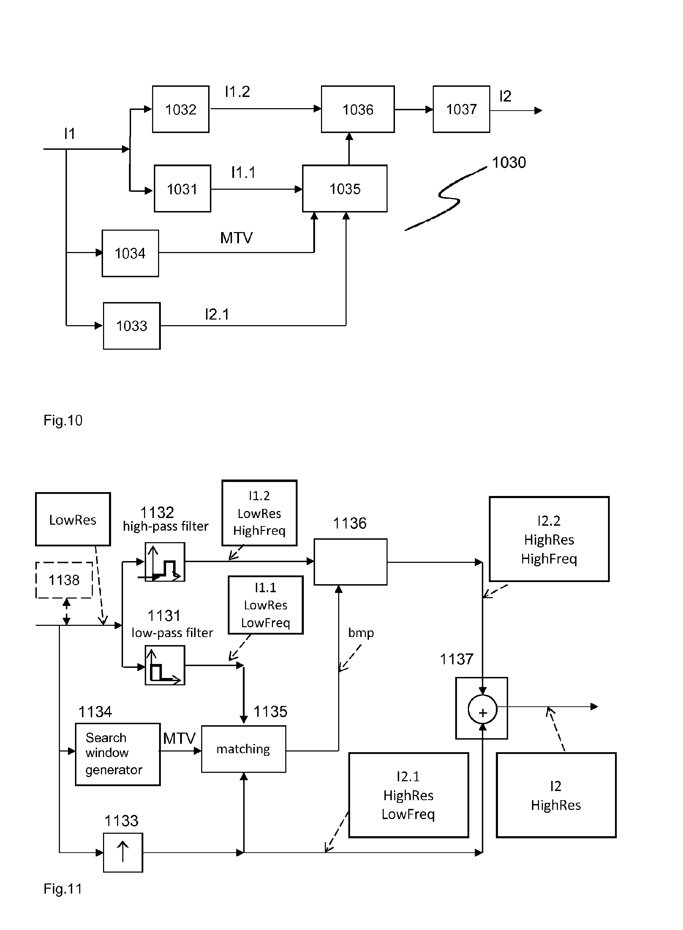

Fig.10 shows a flow-chart of the method 1030 according to one embodiment of the invention. In this embodiment, a (automatic, usually computer-implemented) method for generating a super-resolved image from an input image using example based super-resolution, wherein the input image is divided into blocks, comprises the following steps. A first step 1031 comprises low-pass filtering 31 the input image, wherein a LF version of the input image I1.1 is generated that comprises blocks having a same size as the input image's blocks.

A second step 1032 comprises high-pass filtering 32 the input image, wherein a HF version of the input image I1.2 is generated that comprises blocks having the same size as the input image's blocks.

A third step 1033 comprises spatially upsampling 33 the input image, wherein spatial interpolation is used and wherein a HR-LF version of the input image I2.1 is obtained that comprises blocks having the same size as the input image's blocks.

A fourth step 1035 comprises selecting a block of the HR-LF version of the input image I2.1 as current block, and for each block of the HR-LF version of the input image I2.1 being selected as current block: searching 35 a similar block in the LF version of the input image I1.1 and determining a (relative) position bmp of the similar block, wherein for each block of the HR-LF version of the input image I2.1 a search is performed within an individual search window in the LF version of the input image I1.1. The search window is defined by a match-test vector that comprises a list of each of a plurality of test positions in the LF version of the input image I1.1.

A fifth step 1036 comprises extracting 36 a block from the HF version of the input image I1.2 at said determined relative position bmp.

A sixth step 1037 comprises adding 37 the block extracted from the HF version of the input image I1.2 to the current block of the HR-LF version of the input image I2.1, wherein pixel values are added, and wherein the super-resolved image I2 is obtained.

In one embodiment, the method further comprises steps of over-segmenting the input image into superpixels, each superpixel being an adjacent area of similar appearance in terms of at least luminance, color and texture. In one embodiment, the method further comprises generating 34 the match-test vector, wherein each search window is located around an initial position in the LR-LF version of the input image I1.1. The initial position is located in a current superpixel, and the test positions of the match-test vector are determined according to their distance from the initial position and according to their distance from the edge of the current superpixel.

In one embodiment, for a current block of the HR-LF version of the input image I2.1, the initial position of the similar block, relative to the size of the LR-LF version of the input image I1.1, is the same as the current block's relative position in the HR-LF version of the input image I2.1.

In one embodiment, the test positions are determined according to a linear combination of their distance from the initial position and their distance from an edge of the current superpixel.

In one embodiment, a topology level is assigned to each pixel of a superpixel, wherein the topology level indicates for each pixel its distance from the nearest edge of their respective superpixel, and wherein the test positions of the match-test vector are determined according to their distance from said initial position and a difference between the topology level of each test position and the topology level of said initial position.

In one embodiment, a topology map is generated and stored that indicates a topology level for each pixel of the input image I1, or the LR-LF version of the input image I1.1 or the LR-HF version of the input image I1.2 respectively (since all three have the same size), and the topology levels are determined according to the topology map.

In one embodiment, the distance between a test position and the initial position is measured as a Manhattan or Euclidian distance.

In one embodiment, the spatial interpolation is one of a bilinear interpolation, bicubic interpolation and Finite-Impulse-Response filter (FIR) upsampling. In other embodiments, other spatial interpolation methods can be used.

In one embodiment, similarity of blocks is determined according to a similarity measure between the blocks, the similarity measure being one of a sum-of-absolute-differences (SAD), a cross-correlation using averages and variances, and a sum-of-squared-differences (SSD).

In one embodiment, the method comprises further steps of separating the input image into first overlapping blocks of predefined size and separating the low-frequency version of the input image into blocks of said predefined size.

In one embodiment, the Euclidean distance $L_2$ is used instead of the Manhattan distance $L_1$ in eq.(2). Then,

the Euclidean distance $L_2$ is also used for generating the topology map. In an embodiment, a superpixel topology is generated by classifying (or weighting) pixels according to their distance from the superpixel edge. In an embodiment, the distance between two locations is calculated as a combination of a topology level difference and a Manhattan distance between the locations (ie. a linear combination with a weighting parameter). The combination is referred to as total distance herein. The match-test vector comprises only test positions that are within a maximum total distance (or below a total distance threshold). In an embodiment, the elements of the match-test vector (ie. the test positions) are sequentially ordered according to their total distance, starting with elements having a least distance.

Fig.11 shows a block diagram of a device according to one embodiment of the invention. In this embodiment, a device 1130 for generating a super-resolved image from an input image using example based super-resolution, wherein the input image is divided into blocks, and the device comprises at least a low-pass filter 1131, a high-pass filter 1132, an interpolation module 1133, a search window generation module 1134, a block search and comparison module 1135, a block extraction module 1136 and an adder module 1137.

The low-pass filter 1131 is suitable for low-pass filtering the input image, wherein a low-frequency version of the input image I1.1 is generated that comprises blocks having a same size as the input image's blocks. The high-pass filter 1132 is suitable for high-pass filtering the input image, wherein a high-frequency version of the input image 11.2 is generated that comprises blocks having the same size as the input image's blocks. The interpolation module 1133 is suitable for spatially upsampling the input image, wherein spatial interpolation is used and wherein a high-resolution low-frequency version of the input image 12.1 is obtained that comprises blocks having the same size as the input image's blocks. The search window generation module 1134 is suitable for generating a search window in the low-frequency version of the input image 11.1, wherein individual search windows are associated with single blocks of the high-resolution low-frequency version of the input image 12.1, and wherein the search window is defined by a match-test vector MTV that comprises a list of each of a plurality of test positions in the low-frequency version of the input image 11.1. The block search and comparison module 1135 is suitable for searching for each block of the high-resolution low-frequency version of the input image 12.1 a similar block in the low-frequency version of the input image I1.1 and for determining a relative position bmp of the similar block, wherein for each block of the high-resolution low-frequency version of the input image I2.1 a search is performed within its associated search window in the low-frequency version of the input image 11.1. The block extraction module 1136 is suitable for extracting a block of said same size from the high-frequency version of the input image I1.2 at said determined relative position bmp. The adder module 1137 is suitable for adding the block extracted from the high-frequency version of the input image I1.2 to the a current block of the high-resolution low-frequency version of the input image 12.1, wherein pixel values are added, and wherein the super-resolved image 12 is obtained.

In one embodiment, the device further comprises an over-segmenting module 1138 suitable for over-segmenting the input image into superpixels, each superpixel being an adjacent area of similar appearance in terms of at least luminance, color and texture.

In one embodiment, each search window is located around an initial position col, row in the LR-LF image 11.1, the initial position being located in a current superpixel, and the test positions are determined according to their distance from the initial position and according to their distance from the edge of the current superpixel.

In one embodiment, the over-segmenting module has an input for receiving segmentation data for over-segmenting the input image into superpixels.

In one embodiment, the device further comprises a match-test vector generation module 1140 for generating said match-test vector, wherein the match-test vector generation module has a border distance analysis module 1141 and a distance measuring and ranking module 1142. The border distance analysis module 1141 is suitable for determining a minimum distance between a pixel and the current superpixel edge, and for generating a topology map of the current superpixel, the topology map assigning to each pixel of a superpixel a topology level that indicates the pixel's determined distance. The distance measuring and ranking module 1142 is suitable for calculating for each pixel of a superpixel a combination of to their distance from the initial position and their distance from the edge of the current superpixel and generating the match-test vector for the reference point. In one embodiment, the test positions are determined according to a linear combination of to their distance from the initial position and their distance from the edge of the current superpixel. In one embodiment, the test positions of the match-test vector are determined according to their distance from said initial position and a difference between the topology level of each test position and the topology level of said initial position.

It should be noted that although shown only with respect to super-resolution applications, other types of image processing applications may be constructed other than a super-resolution application, as would be apparent to those of ordinary skill in the art, all of which are contemplated within the spirit and scope of the invention.

While there has been shown, described, and pointed out fundamental novel features of the present invention as applied to preferred embodiments thereof, it will be understood that various omissions and substitutions and changes in the apparatus and method described, in the form and details of the devices disclosed, and in their operation, may be made by those skilled in the art without departing from the spirit of the present invention. Although the present invention has been disclosed with regard to single image super-resolution, one skilled in the art would recognize that the method and devices described herein may be applied to any super-resolution method that uses training images, even if the training images are different from the image to be super-resolved. It is expressly intended that all combinations of those elements that perform substantially the same function in substantially the same way to achieve the same results are within the scope of the invention. Substitutions of elements from one described embodiment to another are also fully intended and contemplated.

It will be understood that the present invention has been described purely by way of example, and modifications of detail can be made without departing from the scope of the invention. Each feature disclosed in the description and (where appropriate) the claims and drawings may be provided independently or in any appropriate combination. Features may, where appropriate be implemented in hardware, software, or a combination of the two. Connections may, where applicable, be implemented as wireless connections or wired, not necessarily direct or dedicated, connections.

Reference numerals appearing in the claims are by way of illustration only and shall have no limiting effect on the scope of the claims.

Cited References

[1] Research project SCENE - Novel representations for digital media beyond sample-based (video) or model-based (graphics) http://3d-scene.eu/index.htm

[2] M. Reso, J. Jachalsky, B. Rosenhahn, and J. Ostermann; Temporally Consistent Superpixels; Technical Report XT60-2012-001, Technicolor R&I, Nov 2012

[3] R. Achanta, et.al.; SLIC Superpixels Compared to State-of-the-Art Superpixel Methods; IEEE Transactions on Pattern Analysis and Machine Intelligence, Vol. 43 No. 11; Nov 2012

[4] C. Y. Ren and I. Reid; gSLIC: a real-time implementation of SLIC superpixel; Technical Report University of Oxford, Department of Engineering Science; 2011

**Claims**

1. A computer-implemented method for generating a super-resolved image from an input image using example based super-resolution, wherein the input image is divided into blocks, the method comprising

- low-pass filtering (31) the input image, wherein a low-frequency version of the input image (I1.1) is generated that comprises blocks having a same size as the input image's blocks;
- high-pass filtering (32) the input image, wherein a high-frequency version of the input image (I1.2) is generated that comprises blocks having the same size as the input image's blocks;
- spatially upsampling (33) the input image, wherein spatial interpolation is used and wherein a high-resolution low-frequency version of the input image (I2.1) is obtained that comprises blocks having the same size as the input image's blocks;
- for each block of the high-resolution low-frequency version of the input image (I2.1) selected as current block, searching (35) a similar block in the low-frequency version of the input image (I1.1) and determining a relative position (bmp) of the similar block, wherein for each block of the high-resolution low-frequency version of the input image (I2.1) a search is performed within an individual search window in the low-frequency version of the input image (I1.1);
- extracting (36) a block from the high-frequency version of the input image (11.2) at said determined relative position (bmp); and
- adding (37) the block extracted from the high-frequency version of the input image (11.2) to the current block of the high-resolution low-frequency version of the input image (I2.1), wherein pixel values are added, and wherein the super-resolved image (12) is obtained;

wherein said search window is defined by a match-test vector that comprises a list of each of a plurality of test positions in the low-frequency version of the input image (I1.1).

2. Method according to claim 1, further comprising steps of

- over-segmenting the input image into superpixels, each superpixel being an adjacent area of similar appearance in terms of at least luminance, color and texture; and
- generating (34) said match-test vector, wherein each search window is located around an initial position (col, row) in the low-resolution low-frequency version of the input image (I1.1), the initial position (col, row) being located in a current superpixel, and wherein said test positions of the match-test vector are determined according to their distance from the initial position (col, row) and according to their distance from the edge of the current superpixel.

3. Method according to claim 2, wherein for a current block of the high-resolution low-frequency version of the input image (I2.1), said initial position (col, row) of the similar block, relative to the size of the low-resolution low-frequency version of the input image (I1.1), is the same as the current block's relative position in the high-resolution low-frequency version of the input image (I2.1).

4. Method according to claim 2 or 3, wherein the test positions are determined according to a linear combination of their distance from said initial position (col, row) and their distance from an edge of the current superpixel.

5. Method according to one of the claims 2-4, wherein a topology level is assigned to each pixel of a superpixel, the topology level indicating for each pixel its distance from the nearest edge of their respective superpixel, and wherein the test positions of the match-test vector are determined according to their distance from said initial position (col, row) and a difference between the topology level of each test position and the topology level of said initial position (col, row).

6. Method according to claim 5, wherein a topology map is generated and stored that indicates a topology level for each pixel of the input image (I1), or the low-resolution low-frequency version of the input image (I1.1) respectively, and the topology levels are determined according to the topology map.

7. Method according to one of the claims 2-6, wherein the distance between a test position and the initial position (col, row) is measured as a Manhattan distance.

8. Method according to any of claims 1-7, wherein similarity of blocks is determined according to a similarity measure between the blocks, the similarity measure being a sum-of-absolute-differences (SAD).

9. A device for generating a super-resolved image from an input image using example based super-resolution, comprising
a processor and
a memory storing instructions that, when executed, cause the apparatus to perform the method steps of any one or more of the claims 1-8.

10. A device (1130) for generating a super-resolved image from an input image using example based super-resolution, wherein the input image is divided into blocks, comprising

- low-pass filter (1131) for low-pass filtering the input image, wherein a low-frequency version of the input image (I1.1) is generated that comprises blocks having a same size as the input image's blocks;
- high-pass filter (1132) for high-pass filtering the input image, wherein a high-frequency version of the input image (I1.2) is generated that comprises blocks having the same size as the input image's blocks;
- interpolation module (1133) for spatially upsampling the input image, wherein spatial interpolation is used and wherein a high-resolution low-frequency version of the input image (I2.1) is obtained that comprises blocks having the same size as the input image's blocks;
- search window generation module (1134) for generating a search window in the low-frequency version of the input image (I1.1), wherein individual search windows are associated with single blocks of the high-resolution low-frequency version of the input image (I2.1), and wherein the search window is defined by a match-test vector (MTV) that comprises a list of each of a plurality of test positions in the low-frequency version of the input image (I1.1);
- block search and comparison module (1135) for searching for each block of the high-resolution low-frequency version of the input image (I2.1) a similar block in the low-frequency version of the input image (I1.1) and for determining a relative position (bmp) of the similar block, wherein for each block of the high-resolution low-frequency version of the input image (I2.1) a search is performed within its associated search window in the low-frequency version of the input image (I1.1);

- block extraction module (1136) for extracting a block of said same size from the high-frequency version of the input image (I1.2) at said determined relative position (bmp); and
- adder module (1137) for adding the block extracted from the high-frequency version of the input image (I1.2) to the a current block of the high-resolution low-frequency version of the input image (I2.1), wherein pixel values are added, and wherein the super-resolved image (I2) is obtained.

11. The device according to claim 10, further comprising

  - an over-segmenting module (1138) for over-segmenting the input image into superpixels, each superpixel being an adjacent area of similar appearance in terms of at least luminance, color and texture;

  wherein each search window is located around an initial position (col, row) in the low-resolution low-frequency image (I1.1), the initial position (col, row) being located in a current superpixel, and wherein the test positions are determined according to their distance from the initial position (col, row) and according to their distance from the edge of the current superpixel.

12. The device according to claim 11, wherein the over-segmenting module has an input for receiving segmentation data for over-segmenting the input image into superpixels.

13. The device according to one of the claims 10-12, further comprising a match-test vector generation module (1140) for generating said match-test vector, wherein the match-test vector generation module has
a border distance analysis module (1141) for determining a minimum distance between a pixel and the current superpixel edge, and for generating a topology map of the current superpixel, the topology map assigning to each pixel of a superpixel a topology level that indicates the pixel's determined distance, and
a distance measuring and ranking module (1142) for calculating for each pixel of a superpixel a combination of to their distance from the initial position (col, row) and their distance from the edge of the current superpixel and generating the match-test vector for the reference point (col, row).

14. The device according to one of the claims 10-13, wherein the test positions are determined according to a linear combination of to their distance from the initial position (col, row) and their distance from the edge of the current superpixel.

15. The device according to one of the claims 10-14, wherein the test positions of the match-test vector are determined according to their distance from said initial position (col, row) and a difference between the topology level of each test position and the topology level of said initial position (col, row).

colMin  col  colMax

upper left
image border

search window
10

rowMin

searchRows
13

row

image object edge
15

rowMax

4 parameters:
center pixel position  - col, row
matching block size    - searchCols, searchRows

searchCols
12

Fig.1

col

upper left
image border

10

search window
20

row

25
image object edge

| i | x | y |
|---|---|---|
| 0 | col | row |
| 1 | col-1 | row-1 |
| 2 | col+1 | row+1 |
| 3 | col-1 | row |
| 4 | col+1 | row |
| 5 | col | row-1 |
| 6 | ... | ... |

MTV

Fig.2

Fig.3

Fig.4

**B1**

**B2**

superpixel
labels

$i_{50}$

50

51

border distance
analysis

54

test-vector length **N**
weight **α**

superpixel
topology

52

distance measure
+ ranking

**Distance measure for ranking:**

$$D_{p_0}(p) = (1-\alpha) \cdot T(p_0, p) + \alpha \cdot L_1(p_0, p)$$

$T$ – topology distance

$L_1$ – Manhattan distance

$\alpha$ – weighting

$p_0$ – fixed pixel position

$p$ – variable pixel position

pixel adaptive
test-vectors

$O_{50}$

Fig.5

a)

b)

Fig.6

a)

b)

c)

d)

e)

Fig.7

**PSNR**

34,0

32,87     32,91

33,0

32,0

31,0

30,0

29,0

27,95     28.01

28,0

27,30     27,34

27,0

26,0

Fig.8

**PSNR**

im

28,1

28,0

28,0                                              91

27,9

27,9                                              92

27,8

20%    40%    70%    100%

Fig.9

I1.2

1032     1036     1037   I2

I1

I1.1

1031     1035

1030

MTV

1034

I2.1

1033

Fig.10

LowRes    1132    high-pass filter    I1.2 LowRes HighFreq    1136    I2.2 HighRes HighFreq

1138

I1.1 LowRes LowFreq

1131 low-pass filter

bmp

1137

1134 Search window generator    MTV    1135 matching

+

1133

I2.1 HighRes LowFreq

I2 HighRes

Fig.11

EUROPEAN SEARCH REPORT

Application Number

EP 14 30 6130

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SALVADOR JORDI ET AL: "Patch-based spatio-temporal super-resolution for video with non-rigid motion", SIGNAL PROCESSING. IMAGE COMMUNICATION, ELSEVIER SCIENCE PUBLISHERS, AMSTERDAM, NL, vol. 28, no. 5, 5 March 2013 (2013-03-05), pages 483-493, XP028588765, ISSN: 0923-5965, DOI: 10.1016/J.IMAGE.2013.02.002 | 1,8-10 | INV. G06T3/40 |
| A | * abstract * * page 484, paragraph 2.1 - page 485 * * page 485, paragraph 3 - page 487, paragraph 3.3; figure 2 * | 2-7, 11-15 | |
| X | GILAD FREEDMAN ET AL: "Image and video upscaling from local self-examples", ACM TRANSACTIONS ON GRAPHICS (TOG), ACM, US, vol. 30, no. 2, 22 April 2011 (2011-04-22), pages 1-11, XP058001113, ISSN: 0730-0301, DOI: 10.1145/1944846.1944852 | 1,8-10 | |
| | | | TECHNICAL FIELDS SEARCHED (IPC) |
| | | | G06T |
| A | * abstract * * page 3, paragraph 3 - page 5, paragraph 3.1 * | 2-7, 11-15 | |

-/--

The present search report has been drawn up for all claims

| Place of search | Date of completion of the search | Examiner |
|---|---|---|
| Munich | 9 February 2015 | Zamuner, Umberto |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 14 30 6130

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | FREEMAN W T ET AL: "Example-based super-resolution", IEEE COMPUTER GRAPHICS AND APPLICATIONS, IEEE SERVICE CENTER, NEW YORK, NY, US, vol. 22, no. 2, 1 March 2002 (2002-03-01), pages 56-65, XP011094241, ISSN: 0272-1716, DOI: 10.1109/38.988747 * abstract * * page 58, left-hand column, line 15 - page 59, left-hand column, line 13 * * page 61, left-hand column, line 25 - page 62, left-hand column, line 5 * ----- | 1-15 | |
| A | DANIEL GLASNER ET AL: "Super-resolution from a single image", COMPUTER VISION, 2009 IEEE 12TH INTERNATIONAL CONFERENCE ON, IEEE, PISCATAWAY, NJ, USA, 29 September 2009 (2009-09-29), pages 349-356, XP031672601, ISBN: 978-1-4244-4420-5 * the whole document * ----- | 1-15 | |

TECHNICAL FIELDS
SEARCHED      (IPC)

The present search report has been drawn up for all claims

| Place of search | Date of completion of the search | Examiner |
|---|---|---|
| Munich | 9 February 2015 | Zamuner, Umberto |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

   ................................................................................
& : member of the same patent family, corresponding
   document

EPO FORM 1503 03.82 (P04C01)

## REFERENCES CITED IN THE DESCRIPTION

### Patent documents cited in the description

- US 2012281923 A

### Non-patent literature cited in the description

- **M. RESO ; J. JACHALSKY ; B. ROSENHAHN ; J. OSTERMANN.** Temporally Consistent Superpixels. *Technical Report XT60-2012-001, Technicolor R&I,* November 2012
- **R. ACHANTA.** SLIC Superpixels Compared to State-of-the-Art Superpixel Methods. *IEEE Transactions on Pattern Analysis and Machine Intelligence,* November 2012, vol. 43 (11
- **C. Y. REN ; I. REID.** gSLIC: a real-time implementation of SLIC superpixel; Technical Report University of Oxford. *Department of Engineering Science,* 2011